# EUROPEAN PATENT SPECIFICATION

(11) **EP 4 630 369 B1**
(45) Date of publication and mention of the grant of the patent: **11.11.2026**
(21) Application number: 24707207.7
(22) Date of filing: 27.02.2024
(51) Int. Cl.: C01C 1/04, C01B 21/38, C25B 1/04

(54) **SYSTEM FOR INTEGRATED NITRIC ACID AND AMMONIA PRODUCTION AND METHOD OF PRODUCTION THEREOF**
SYSTEM ZUR INTEGRIERTEN SALPETERSÄURE- UND AMMONIAKHERSTELLUNG UND VERFAHREN ZUR HERSTELLUNG DAVON
SYSTÈME POUR LA PRODUCTION INTÉGRÉE D'ACIDE NITRIQUE ET D'AMMONIAC ET SON PROCÉDÉ DE PRODUCTION

(30) Priority: 27.02.2023 EP 23158729
(43) Date of publication of application: 15.10.2025
(73) Proprietor: Yara International ASA, 0277 Oslo (NO)
(72) Inventor: GILLES, David, 1160 Auderghem (BE); DE SMET, Andre, 4535 JH Terneuzen (NL)
(74) Representative: De Clercq & Partners
(86) International application number: PCT/EP2024/054989
(87) International publication number: WO 2024/180084

(56) References cited:
- CN-B- 106 185 984
- GB-A- 1 597 070
- US-A1- 2019 284 052

## Description

### Field of the invention

The present disclosure relates to the field of integrated nitric acid and ammonia production.

### Background

The integration of the production of nitric acid and of the production of ammonia can present various benefits.

If the production of nitric acid can be made more energy efficient such as to export additional steam from the conventional steam turbine, or as to generate more power from the tail gas expansion through the conventional tail gas expander, the integration of the nitric acid process in the ammonia production process can then allow for supplying, for example, electricity to an electrolyser producing hydrogen for ammonia production, or for supplying heat to natural gas to be converted to carbon monoxide and hydrogen for ammonia production.

In particular, the integration of the production of nitric acid and of the production of ammonia can be further beneficial if, instead being vented to the atmosphere, the tail gas generated from nitric acid production, as it contains about 85.0% to 99.5% nitrogen, is utilized in the production of ammonia. It has indeed been recognised that the nitric acid tail gas can be used as a precursor to a synthesis gas for ammonia synthesis.

WO2018054565 (Casale, 2017) discloses an integrated process for the synthesis of ammonia and nitric acid, comprising a synthesis of nitric acid including the following steps: a) subjecting a stream of ammonia to catalytic oxidation, obtaining a gaseous stream containing nitrogen oxides; b) subjecting said gaseous stream to a process of absorption of nitrogen oxides, providing nitric acid and a tail gas containing nitrogen and residual nitrogen oxides; c) subjecting at least a portion of said first tail gas to a process of removal of nitrogen oxides, providing a nitrogen oxides-depleted tail gas, and comprising a synthesis of ammonia by catalytic conversion of a make-up gas comprising hydrogen and nitrogen in an ammonia synthesis loop, wherein at least a portion of said second tail gas is used as nitrogen source for obtaining said make-up gas.

GB1597070A (Humphreys and Glasgow Ltd, 1978) discloses a process for the production of an ammonia synthesis gas which comprises providing a stream of hydrogen gas, obtaining a nitrogen gas-containing effluent gas stream from a process for the production of nitric acid from ammonia by the oxidation thereof with atmospheric air, and reacting a portion of the hydrogen in the hydrogen stream with the effluent gas to remove oxygen therefrom and to leave a mixture of hydrogen and nitrogen suitable for use in an ammonia-forming reaction.

WO2005082779A2 (Uhde Gmbh) discloses a method for reducing the emission of oxides of nitrogen during the production of nitric acid and a plant suitable for carrying out said method. The method comprises the following steps: i) producing ammonia by catalytic reaction of nitrogen with hydrogen in an ammonia plant, ii) introducing the ammonia so produced into an nitric acid plant, iii) combusting the ammonia to oxides of the nitrogen in the nitric acid plant, iv) washing the gas containing the oxides of the nitrogen with water in at least one absorption column disposed downstream of the ammonia combustion, thereby producing nitric acid, and v) returning to the ammonia plant at least a part of the residual gas leaving the nitric acid plant and containing oxides of the nitrogen.

GB2536996A (Johnson Matthey PLC, 2016) discloses the production of ammonium nitrate (NH₄NO₃) from ammonia and nitric acid (HNO₃) comprising the steps of: a) providing a reaction gas mixture comprising hydrogen and nitrogen; b) passing the reaction gas mixture over a catalyst to form ammonia; c) catalytically oxidising a first portion of the ammonia to form a gas mixture comprising nitrogen, oxygen and nitric oxide (NO); and d) converting the NO into HNO₃, thereby forming a vent gas mixture comprising nitrogen, oxygen and nitrogen oxides (NOₓ), wherein the process comprises treating the vent gas mixture to produce a nitrogen gas stream and using at least a portion of the nitrogen gas stream (e.g. having less than 10 ppm oxygen) in the reaction gas mixture, and reacting a second portion of the ammonia recovered in step (b) with a portion of the nitric acid recovered in step (d) to form NH₄NO₃. The hydrogen may be generated by steam reforming of hydrocarbons to produce syngas, followed by water-gas shift (WGS) stage, carbon dioxide removal and methanation stage. The vent gas treatment of NOₓ may comprise reducing it with ammonia from the ammonia production unit to form nitrogen.

WO2019214921A1 (Casale, 2019) discloses an integrated process for the synthesis of ammonia and nitric acid including: production of an ammonia make-up synthesis gas, comprising steam reforming of a hydrocarbon feedstock under provision of steam reforming heat; catalytic conversion of said make-up synthesis gas into ammonia; catalytic oxidation of a stream of ammonia obtaining a process gas; absorption of said process gas with water obtaining nitric acid, wherein at least a portion of the steam reforming heat is recovered from said hot process gas.

Therefore, it can be concluded that the prior art discloses integrated systems for the recirculation of the nitric acid tail gas to ammonia production. The prior art further discloses the utilization of heat from the nitric acid process in grey ammonia production, that is, involving reforming of a hydrocarbon feedstock. However, there remains a need to optimize the energy requirements associated with the recirculation of the nitric acid tail gas in ammonia production.

### Summary

In one aspect of the disclosure, a system for combined nitric acid and ammonia production is disclosed. The system comprises:
- a nitric acid plant for producing nitric acid comprising:
   ∘ an absorption tower for absorbing NOₓ gases, thereby generating nitric acid and a tail gas comprising nitrogen, NOₓ and O₂ gases;
   ∘ a tail gas expander configured for expanding a first part of the tail gas, thereby recovering energy from the first part of the tail gas;
   ∘ a first treatment unit located upstream of the tail gas expander for removing NOₓ from at least the first part of the tail gas, such that the first part of the tail gas provided to the tail gas expander comprises 100 ppm by volume or less NOₓ;
   ∘ means for heating upstream of the first treatment unit, for heating at least the first part of the tail gas; and
- an ammonia production plant for producing ammonia and comprising:
   ∘ a water electrolyzer for generating a hydrogen gas and an oxygen gas;
   ∘ a means for mixing at least a first part of the hydrogen gas and a second part of the tail gas, thereby generating a synthesis gas;
   ∘ a first compression system configured for compressing a gas, said compression system comprising one or several compression units and generating a compressed gas,
   ∘ a second treatment unit for removing NOₓ, CO, CO₂ and O₂ from a gas stream, located upstream or downstream of the means for mixing, for generating a gas stream comprising less than 10 ppm by volume of atomic oxygen in total as NOₓ, CO, CO₂ and O₂; and
   ∘ an ammonia synthesis unit for reacting a compressed synthesis gas, thereby generating ammonia, as from claim 1.

The system is characterised in that at least one compression unit of the first compression system is located upstream the second treatment unit.

More in particular, the second treatment unit may be located upstream or downstream of the means for mixing at least a first part of the hydrogen gas and a second part of the tail gas. The second treatment unit is configured to remove NOₓ, CO, CO₂ and O₂ from a gas stream, such that the gas stream leaving the second treatment unit comprises less than 10 ppm by volume of atomic oxygen in total as NOₓ, CO, CO₂ and O₂. If the second treatment unit is located upstream of the means for mixing, it receives the compressed second part of the tail gas, and if the second treatment unit is located downstream of the means for mixing, the second treatment unit receives the compressed synthesis gas.

The inventor has found that by placing at least one compression unit upstream the second treatment unit, the heat provided by the gas leaving this compression unit upstream the second treatment unit can be utilised in operating the second treatment unit, which means that the energy requirement for operating the second treatment unit is reduced.

Therefore, the system of the disclosure allows for the optimization of the energy requirements associated with the recirculation of the nitric acid tail gas in ammonia production.

In one embodiment according to the system of the disclosure, the system further comprises an air separation unit configured to provide nitrogen to the synthesis gas.

In one embodiment according to the system of the disclosure, in the means for mixing, the first part of the hydrogen gas is mixed with the second part of the tail gas, and the system further comprises a second compression system configured for compressing a second part of the hydrogen gas; or, in the means for mixing, all the hydrogen gas generated by the water electrolyzer is mixed with the second part of the tail gas.

According to the system of the disclosure, the first compression system further comprises at least one compression unit downstream of the second treatment unit and:
- the system further comprises a first cooling unit between the second treatment unit and the at least one compression unit downstream of the second treatment unit, the first cooling unit is configured to exchange heat between the synthesis gas and a coolant, or between the second part of the tail gas and a coolant, thereby obtaining a first heated coolant, and the first cooling unit is further configured to provide the first heated coolant to the second treatment unit; and/or
- the system comprises a second cooling unit downstream the at least one compression unit downstream of the second treatment unit, the second cooling unit is configured to exchange heat between the synthesis gas and a coolant, thereby obtaining a second heated coolant, and the second cooling unit is further configured to provide the second heated coolant to the second treatment unit.

In one embodiment according to the system of the disclosure, the means for mixing is in direct fluid communication with the tail gas upstream the means for heating, and/or with the tail gas downstream the means for heating and upstream the first treatment unit, and/or with the tail gas downstream the first treatment unit.

In one embodiment according to the system of the disclosure, the system further comprises a hydrogen production unit comprises:
- a steam reforming unit for converting a hydrocarbon into carbon monoxide and hydrogen gas;
- a shift conversion unit for converting the carbon monoxide and hydrogen provided by the steam reforming unit into carbon dioxide and hydrogen gas; and
- a carbon dioxide removal unit for removing carbon dioxide from the carbon dioxide and hydrogen gas provided by the shift conversion unit;
and the hydrogen production unit is configured to provide hydrogen to the synthesis gas.

In one embodiment according to the system of the disclosure, the first and/or the second treatment unit is either a non-selective catalytic reduction unit or a selective catalytic reduction unit combined with a dedicated de-oxygenation unit, and, in particular, the selective catalytic reduction unit is supplied with the ammonia generated by the ammonia synthesis unit, or the non-selective catalytic reduction unit is supplied with the hydrogen gas generated by the water electrolyzer or by the carbon dioxide removal unit, with the ammonia generated by the ammonia synthesis unit, or with a hydrocarbon.

In one aspect of the disclosure, a method for the combined production of nitric acid and ammonia, performed in a system according to the system of the disclosure, is disclosed. The method comprises the steps of:
- producing a tail gas in the nitric acid plant;
- mixing hydrogen gas and a second part of the tail gas, thereby generating a synthesis gas;
- treating the second part of the tail gas or the synthesis gas in the second treatment unit, particularly wherein the second treatment unit is located upstream or downstream the means for mixing;
- compressing a gas in a first compression system wherein at least one compression unit of the first compression system is located upstream the second treatment unit, thereby generating a compressed gas; and
- reacting the compressed synthesis gas in the ammonia synthesis unit, thereby generating ammonia, as from claim 7.

The method is characterized in that part of the step of compressing a gas is performed in the at least one compression unit upstream of the second treatment unit, particularly wherein the second part of the tail gas or the synthesis gas is compressed in the at least one compression unit upstream of the second treatment unit.

In one embodiment according to the method of the disclosure, the method further comprises the step of providing nitrogen to the synthesis gas, and the nitrogen is produced by an air separation unit.

In one embodiment according to the method of the disclosure, only part of the hydrogen gas is mixed with the second part of the tail gas in the mixing step, and the remaining part of the hydrogen gas is separately compressed in a second compression system; or wherein all the hydrogen gas produced by the water electrolyzer is mixed with the second part of the tail gas in the mixing step.

According to the method of the disclosure, the method further comprises the steps of:
- exchanging heat between the synthesis gas and a coolant in the first cooling unit, thereby obtaining the first heated coolant and providing heat from the first heated coolant to the second treatment unit; and/or
- exchanging heat between the synthesis gas and a coolant in the second cooling unit, thereby obtaining the second heated coolant and providing heat from the second heated coolant to the second treatment unit.

In one embodiment according to the method of the disclosure, the second part of the tail gas mixed in the mixing step with the hydrogen gas is part of the tail gas upstream the means for heating, and/or is part of the tail gas downstream the means for heating and upstream the first treatment unit, and/or is part of the tail gas downstream the first treatment unit.

In one embodiment according to the method of the disclosure, the method further comprises the steps of:
- producing hydrogen from a hydrocarbon through steam reforming in the hydrogen production unit through the steps of:
   ∘ reforming the hydrocarbon in the steam reforming unit into carbon monoxide and hydrogen gas;
   ∘ converting the carbon monoxide and hydrogen provided by the steam reforming unit into carbon dioxide and hydrogen gas in the shift conversion unit; and
   ∘ removing carbon dioxide from the carbon dioxide and hydrogen gas provided by the shift conversion unit in the carbon dioxide removal unit; and
- providing the hydrogen to the synthesis gas.

In one embodiment according to the method of the disclosure, the treatment of the first and/or the second part of the tail gas is performed through combined selective catalytic reduction and de-oxygenation in the selective catalytic reduction unit combined with a de-oxygenation unit, or through non-selective catalytic reduction in the non-selective catalytic reduction unit, and, in particular, the selective catalytic reduction is performed using the ammonia generated by the ammonia synthesis unit, or the non-selective catalytic reduction is performed using the hydrogen gas generated by the water electrolyzer or by the hydrogen production unit, or using the ammonia generated by the ammonia synthesis unit, or using a hydrocarbon.

In one aspect of the disclosure, a method for revamping an ammonia production plant is disclosed, wherein the ammonia production plant comprises:
∘ a water electrolyzer for generating a hydrogen gas and an oxygen gas;
∘ a first compression system for compressing a synthesis gas comprising hydrogen gas and nitrogen gas, said compression system comprising several compression units, for generating a compressed synthesis gas; and
∘ an ammonia synthesis unit for reacting the compressed synthesis gas, thereby generating ammonia;
and wherein the method comprises the steps of:
∘ introducing a second part of a tail gas generated in a nitric acid production plant in the ammonia production plant;
∘ introducing a means for mixing the hydrogen gas and the second part of a tail gas, thereby generating a synthesis gas,
∘ introducing a second treatment unit upstream or downstream of the means for mixing and wherein at least one compression unit of the first compression system is located upstream of the second treatment unit, wherein said second treatment unit is configured for removing NOₓ, CO, CO₂ and O₂ from a gas stream and for generating a gas stream comprising less than 10 ppm of atomic oxygen, as from claim 13.

### Description of the Figures

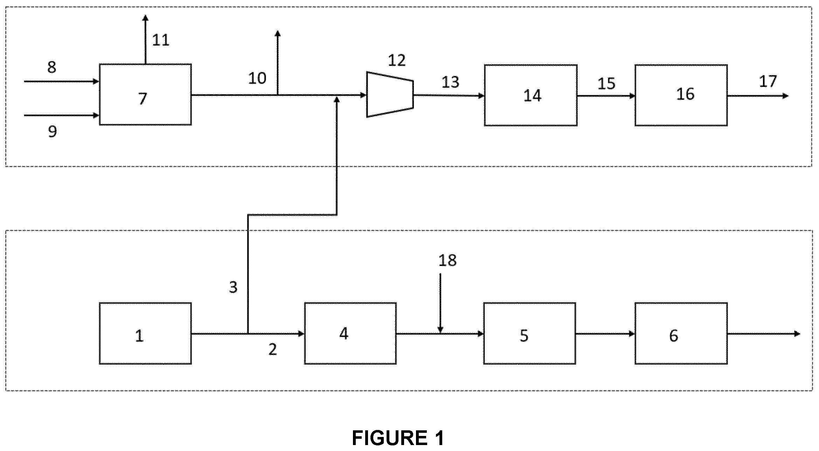

**Figure 1** shows one embodiment of the system according to the present disclosure.

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging between ... to ..." or "range from ... to ..." or "up to" as used when referring to a range for a measurable value, such as a parameter, an amount, a time period, and the like, is intended to include the limits associated to the range that is disclosed.

In one aspect of the disclosure, a system for combined nitric acid and ammonia production is disclosed. The system comprises a nitric acid plant for producing nitric acid, particularly starting from ammonia, comprising an absorption tower for absorbing NOₓ gases, thereby generating nitric acid and a tail gas comprising nitrogen, NOₓ and O₂ gases, a tail gas expander configured for expanding a first part of the tail gas, thereby recovering energy from the first part of the tail gas, a first treatment unit located upstream of the tail gas expander for treating at least the first part of the tail gas, particularly for removing NOₓ from at least the first part of the tail gas, such that the first part of the tail gas provided to the tail gas expander comprises 100 ppm by volume or less NOₓ, and means for heating upstream of the first treatment unit, for heating at least the first part of the tail gas. Stated differently, the nitric acid plant comprises an absorption tower, generating nitric acid and a tail gas comprising nitrogen, NOₓ and O₂ gases, a means for heating at least a first part of the tail gas, a first treatment unit located downstream of the absorption tower, for removing NOₓ from at least the first part of the tail gas, and a tail gas expander downstream of the first treatment unit configured for expanding a first part of the tail gas, thereby recovering energy from the first part of the tail gas. Typically, the absorption tower is in fluid communication with an ammonia oxidation unit, wherein ammonia catalytically reacts with oxygen, which is typically provided by compressed air, thereby generating a gas stream comprising NOₓ.

The system further comprises an ammonia production plant for producing ammonia and comprising a water electrolyzer for generating a hydrogen gas and an oxygen gas; a means for mixing at least a first part of the hydrogen gas and a second part of the tail gas, thereby generating a synthesis gas; a first compression system configured for compressing a gas, particularly for compressing the synthesis gas and/or for compressing a second part of the tail gas, said compression system comprising one or several compression units and generating a compressed gas, particularly generating a compressed synthesis gas, particularly directly, or following mixing the compressed second part of the tail gas with hydrogen gas; a second treatment unit for removing NOₓ, CO, CO₂ and O₂ from a gas stream, particularly from the second part of the tail gas or from the synthesis gas, for generating a gas stream comprising less than 10 ppm by volume of atomic oxygen in total as NOₓ, CO, CO₂ and O₂, said second treatment unit being located upstream or downstream the means for mixing; and an ammonia synthesis unit for reacting the compressed synthesis gas, thereby generating ammonia.

The system is characterised in that at least one compression unit of the first compression system is located upstream the second treatment unit.

In particular, if the second treatment unit is located upstream of the means for mixing, it receives the compressed second part of the tail gas, and NOₓ, CO, CO₂ and O₂ will be removed from the second part of the tail gas, thereby generating a second part of the tail gas comprising less than 10 ppm by volume of atomic oxygen in total as NOₓ, CO, CO₂ and O₂. In addition, if the second treatment is located downstream of the means for mixing, it receives the compressed synthesis gas, and NOₓ, CO, CO₂ and O₂ will be removed from the synthesis gas, thereby obtaining a compressed synthesis gas comprising less than 10 ppm by volume of atomic oxygen in total as NOₓ, CO, CO₂ and O₂.

Accordingly, in certain embodiments, a system for combined nitric acid and ammonia production is provided, wherein the system comprises (a) a nitric acid plant for producing nitric acid comprising (i) an absorption tower for absorbing NOₓ gases, thereby generating nitric acid and a tail gas comprising nitrogen, NOₓ and O₂ gases; (ii) a tail gas expander configured for expanding a first part of the tail gas, thereby recovering energy from the first part of the tail gas; (iii) a first treatment unit located upstream of the tail gas expander for removing NOₓ from at least the first part of the tail gas, such that the first part of the tail gas provided to the tail gas expander comprises 100 ppm by volume or less NOₓ; and (iv) means for heating upstream of the first treatment unit, for heating at least the first part of the tail gas; and (b) an ammonia production plant for producing ammonia comprising (v) a water electrolyzer for generating a hydrogen gas and an oxygen gas; (vi) a means for mixing at least a first part of the hydrogen gas and a second part of the tail gas, thereby generating a synthesis gas; (vii) a first compression system configured for compressing the synthesis gas, said compression system comprising one or several compression units and generating a compressed synthesis gas, (viii) a second treatment unit for removing NOₓ, CO, CO₂ and O₂ from the synthesis gas, located downstream of the means for mixing, thereby generating a compressed synthesis gas comprising less than 10 ppm by volume of atomic oxygen in total as NOₓ, CO, CO₂ and O₂; and (ix) an ammonia synthesis unit for reacting the compressed synthesis gas, thereby generating ammonia; wherein at least one compression unit of the first compression system is located upstream the second treatment unit.

In addition, in certain embodiments, a system for combined nitric acid and ammonia production is provided, wherein the system comprises (a) a nitric acid plant for producing nitric acid comprising (i) an absorption tower for absorbing NOₓ gases, thereby generating nitric acid and a tail gas comprising nitrogen, NOₓ and O₂ gases; (ii) a tail gas expander configured for expanding a first part of the tail gas, thereby recovering energy from the first part of the tail gas; (iii) a first treatment unit located upstream of the tail gas expander for removing NOₓ from at least the first part of the tail gas, such that the first part of the tail gas provided to the tail gas expander comprises 100 ppm by volume or less NOₓ; and (iv) means for heating upstream of the first treatment unit, for heating at least the first part of the tail gas; and (b) an ammonia production plant for producing ammonia comprising (v) a water electrolyzer for generating a hydrogen gas and an oxygen gas; (vi) a means for mixing at least a first part of the hydrogen gas and a second part of the tail gas, thereby generating a synthesis gas; (vii) a first compression system configured for compressing the second part of the tail gas, said compression system comprising one or several compression units and generating a compressed second part of the tail gas, (viii) a second treatment unit for removing NOₓ, CO, CO₂ and O₂ from the second part of the tail gas, located upstream of the means for mixing, thereby generating a compressed second part of the tail gas comprising less than 10 ppm by volume of atomic oxygen in total as NOₓ, CO, CO₂ and O₂; and (ix) an ammonia synthesis unit for reacting a compressed synthesis gas, thereby generating ammonia; wherein at least one compression unit of the first compression system is located upstream the second treatment unit.

It is further understood that the second treatment unit is in fluid communication with the absorption tower. Indeed, in case the second treatment unit is located upstream of the means for mixing, a second part of the tail gas exiting the absorption tower may be first provided to a compression unit of the first compression system, and subsequently to the second treatment unit and the mixing unit. In case the second treatment unit is located downstream of the mixing unit, a second part of the tail gas exiting the absorption tower may be first provided to the means for mixing to generate a synthesis gas, which subsequently is compressed in a compression unit of the first compression system and treated in the second treatment unit.

The person skilled in the art will recognize that the depletion in NOₓ by the first treatment unit and the depletion in NOₓ, N₂O, CO, CO₂ and O₂ by the second treatment unit are necessary in order to prevent the oxidation of the catalyst, catalysing the formation of ammonia from the compressed synthesis gas.

As defined herein, means for heating are any means for heating the first part of the tail gas to be expanded. In particular, the first part of the tail gas is heated through a heat exchanger, through transfer of the heat of a heating fluid that is cooled upon heating the first part of the tail gas.

As defined herein, means for mixing gases, such as a hydrogen gas and a second part of a tail gas are known to the skilled person, and include for instance mixing vessels, mixing valves, comprising two gas inlets and an outlet for the mixed gas, piping systems equipped with static mixers, injectors, injection nozzles, and the like.

In particular, the compressors are powered by electrical power. In particular, the compression units are powered by turbines run with high quality steam, that is above 99% or more pure steam, which prevents scaling, decreases the need for maintenance and increases the lifetime of the turbines and the compression units.

The inventor has found that by placing at least one compression unit upstream the second treatment unit, the heat provided to the gas leaving this compression unit upstream the second treatment unit can be utilised in operating the second treatment unit, which means that the energy requirement for operating the second treatment unit is reduced. Indeed, the compression unit upstream the second treatment unit contributes to pressurizing the synthesis gas, to obtain the process conditions necessary for converting the synthesis gas into ammonia in the ammonia synthesis unit. At the same time, compression of the gas increases the temperature of the gas, thereby contributing to the heat and temperature conditions required to operate the second treatment unit.

Therefore, the system of the disclosure allows for the optimization of the energy requirements associated with the recirculation of the nitric acid tail gas in ammonia production.

Along with the second treatment unit, it is possible to have a methanator either upstream of the second treatment unit or downstream of the second treatment unit. The methanator can convert remaining CO and CO₂ into methane to further reduce the quantity of atomic oxygen to enter the ammonia synthesis unit. In case the methanator is located upstream of the second treatment unit, the heat generated by the treatment in the methanator and provided by the gas product at the outlet of the methanator can be utilised in the treatment in the second treatment unit. In case the methanator is located downstream of the second treatment unit, the heat generated by the treatment in the methanator and provided by the gas product at the outlet of the methanator can be recovered, for example through a heat exchange system, and supplied to the second treatment.

In particular, the system of the disclosure allows for part of the nitric acid tail gas to be recirculated within the nitric acid plant. This is achieved by fluidly connecting the nitric acid tail gas with an oxygen containing gas such as to achieve a nitric acid tail gas containing gas that has an oxygen content which allows its feeding to the ammonia oxidation burner and/or to the nitric acid absorption tower, such that the conversion of ammonia into nitric oxide and the absorption of NOₓ gases to provide nitric acid can proceed at the desired efficiency. Hence the tail gas, downstream the fluid connection with the oxygen containing gas, is fluidly connected to the ammonia oxidation burner and/or to the nitric acid absorption tower.

Through this latter fluid connection to the ammonia oxidation burner and/or to the nitric acid absorption tower, the power on the air compressor is reduced and the emissions to the air are lowered.

In one embodiment according to the system of the disclosure, the system further comprises an air separation unit configured to provide nitrogen to the synthesis gas.

The system of the disclosure allows for the incorporation of an air separation unit. In this manner, the production of ammonia does not need to be synchronised with the nitric acid production. This means that the production of ammonia does not depend on the production of the tail gas by the nitric acid production plant. In the event that the nitric acid production is disrupted, for example because an emergency stop or maintenance is required within the nitric acid production plant, with the supply of nitrogen gas from the air separation unit, the ammonia production plant can still be operated and ammonia can still be produced. The supply of nitrogen from the air separation unit can be either directly supplied to the ammonia production or can be liquefied for subsequent storage as liquid nitrogen that constitutes a supply of nitrogen can be supplied when needed for ammonia production.

In one embodiment according to the system of the disclosure, in the means for mixing, the first part of the hydrogen gas is mixed with the second part of the tail gas, and the system further comprises a second compression system configured for compressing a second part of the hydrogen gas.

In another embodiment, in the means for mixing, all the hydrogen gas generated by the water electrolyzer is mixed with the second part of the tail gas.

Therefore, the system of the disclosure is flexible such as to allow control on the amount of the hydrogen gas that is treated along with the second part of the tail gas in the second treatment unit. This means that the system can be controlled depending upon the residual CO, CO₂ and O₂ gases in the hydrogen gas. Indeed, if such residual amounts require full treatment of the hydrogen gas through the second treatment, it can be fully treated along with the second part of the tail gas. In the absence of a second compression system, the revamping of a state-of-the-art ammonia plant is simplified as the existing compression units can be used to perform the function of the compression units in the first compression system of the system of the disclosure and no additional compression unit to form a second compression system has to be added.

However, if it is not required to perform full treatment of the hydrogen gas in the second treatment unit, such as to achieve a synthesis gas suitable for being processed in the ammonia synthesis unit, then only part of the hydrogen gas can be treated in the second treatment unit.

Further, through the presence of the second compression system, the pressure of the combined hydrogen gas-second part of the tail gas can be better controlled prior to the final compression of the combined gas such that is suitable for conversion in the ammonia synthesis unit. This means that, overall, the pressure of the synthesis gas entering the ammonia synthesis unit is better controlled, resulting in turn in control of the actual ammonia synthesis in the ammonia synthesis unit.

According to the system of the disclosure, the first compression system further comprises at least one compression unit downstream of the second treatment unit. In addition, the system further comprises a first cooling unit between the second treatment unit and the at least one compression unit downstream of the second treatment unit, the first cooling unit is configured to exchange heat between the synthesis gas or the second part of the tail gas and a coolant, thereby obtaining a first heated coolant, and the first cooling unit is further configured to provide the first heated coolant to the second treatment unit; and/or the system comprises a second cooling unit downstream the at least one compression unit downstream of the second treatment unit, the second cooling unit is configured to exchange heat between the synthesis gas and a coolant, thereby obtaining a second heated coolant, and the second cooling unit is further configured to provide the second heated coolant to the second treatment unit.

With the presence of the first cooling unit, the gas that has to be compressed in the remaining compression unit is colder, which means that less power is required to operate the compression unit. Further, the first heated coolant can supply heat to the second treatment unit which means that the heat in the process is properly used for the operation of the second treatment unit to which, consequently, less heat has to be supplied. With the presence of the second cooling unit, the gas that has to be compressed in any remaining compression unit is colder, which means that less power is required to operate the remaining compression unit. Further, the second heated coolant can supply heat to the second treatment unit which means that the heat in the process is properly used for the operation of the second treatment unit to which, consequently, less heat has to be supplied.

The tail gas may be split in a first part of the tail gas and the second part of the tail gas at different locations between the absorption tower and the tail gas expander, such as between the absorption tower and the means for heating, between the means for heating and the first treatment unit, and/or between the first treatment unit and the tail gas expander. Stated differently, in one embodiment according to the system of the disclosure, the means for mixing is in direct fluid communication with the tail gas upstream the means for heating, and/or with the tail gas downstream the means for heating and upstream the first treatment unit, and/or with the tail gas downstream the first treatment unit. Suitable means for splitting a gas stream are known to the skilled person, and include e.g. a T-shaped connection having one inlet and two outlets, such that a gas flowing through the inlet of the T-connection is split into two gas streams of identical chemical composition.

The system is, hence, flexible such as to allow the control over the temperature and chemical content in atomic oxygen of the second part of the tail gas. Therefore, the system allows the control of the chemical content in atomic oxygen of the second part of the tail gas, hence allowing the control on the required treatment in the second treatment unit. Further, the system allows for the control of the temperature of the second part of the tail gas, thereby allowing the control of the treatment in the second treatment unit and also on the power required to operate the remaining compression units of the first compression system.

In one embodiment according to the system of the disclosure, the system further comprises a hydrogen production unit, comprising a steam reforming unit for converting a hydrocarbon into carbon monoxide and hydrogen gas, a shift conversion unit for converting the carbon monoxide and hydrogen provided by the steam reforming unit into carbon dioxide and hydrogen gas, and a carbon dioxide removal unit for removing carbon dioxide from the carbon dioxide and hydrogen gas provided by the shift conversion unit; and the hydrogen production unit is configured to provide hydrogen to the synthesis gas.

As defined herein, a steam reforming unit is a conventional steam reforming unit (SMR) comprising a primary reforming unit and a secondary reforming unit located downstream the primary reforming unit, or a conventional autothermal reforming unit (ATR) fed by oxygen-enriched air, that is air with above 21% oxygen gas, or pure oxygen gas, the ATR unit being located downstream a conventional fire heater.

The system of the disclosure is flexible such that not all of the hydrogen gas being mixed with the second part of the tail gas has to be produced through a water electrolyser and it can be produced through a conventional SMR or ATR ammonia production plant, involving the treatment of a hydrocarbon with steam and oxygen.

As the transition towards the production of hydrogen solely through the use of a water electrolyser is going to require time, during this transition hydrogen will be produced by a mixture of water electrolysis and SMR or ATR. This means that the hydrogen production system will be a hybrid system comprising a water electrolyser and an SMR or an ATR and it is important that the system of the disclosure is operable with hydrogen gas being produced by such a hybrid system.

In one embodiment according to the system of the disclosure, the first and/or the second treatment unit is either a non-selective catalytic reduction unit or a selective catalytic reduction unit combined with a dedicated de-oxygenation unit, and, in particular, the selective catalytic reduction unit is supplied with the ammonia generated by the ammonia synthesis unit, or the non-selective catalytic reduction unit is supplied with the hydrogen gas generated by the water electrolyzer or by the carbon dioxide removal unit, with the ammonia generated by the ammonia synthesis unit, or with a hydrocarbon. The advantage of using hydrogen is that it is carbon emission-free.

The system of the disclosure allows for both the first and the second treatment unit to be either a non-selective catalytic reduction unit (SNCR), a selective catalytic reduction unit (SCR) combined with a de-oxygenation unit, or a combination thereof.

Therefore, the system allows to advantageously make use of both the benefits of a non-selective catalytic reduction unit including ease of installation, lower capital and operating costs compared with SCR, lower costs associated with the replacement of catalysts and easy retrofitting of components in the large-scale boiler units, resulting in little downtime, and the benefits of an SCR including suitability for NOₓ reduction up to 90%.

In the case of the use of an SCR unit, the de-oxygenation unit is located downstream the SCR unit and has to reduce the content of oxygen gas to reach a content of atomic oxygen of 10 ppm or less. It is not necessary to remove the oxygen in the form of water provided that the amount of water coming out of the SCR. That is because water can be very easily removed during the compression stage, in order to cool the gas stream to be compressed, through the introduction of liquid ammonia into the stream which absorbs it with a very strong affinity.

An advantage of the system of the disclosure is that, considering that the system provides a hydrogen gas and an ammonia gas, there is a source of a clean fuel, that is a fuel the use of which results in reduced green-house gas emissions generated by the combustion of the fuel.

In the event of a hybrid plant utilising a hydrocarbon gas in an SMR or ATR treatment, an advantage is that a source of fuel, such as a hydrocarbon, is already part of the system and, hence, no additional source of fuel is required to supply the second treatment unit. Such advantage is also present when hydrogen or ammonia is supplied as fuel to the second treatment unit since, as mentioned above, hydrogen gas and ammonia gas are also part of the system.

In one aspect of the disclosure, a method for combined nitric acid and ammonia production, performed in a system according to the present disclosure, is disclosed. The method comprises the steps of
- producing the tail gas in the nitric acid plant;
- operating the water electrolyzer of the ammonia production plant, thereby generating the hydrogen gas;
- mixing the hydrogen gas and the second part of the tail gas, thereby generating a synthesis gas;
- treating a gas in the second treatment unit, particularly treating the second part of the tail gas or the synthesis gas, i.e. the mixed hydrogen gas and second part of the tail gas, in the second treatment unit, for removing NOₓ, CO, CO₂ and O₂ from the gas, thereby generating a gas stream, particularly the second part of the tail gas or the synthesis gas, comprising less than 10 ppm by volume of atomic oxygen in total as NOₓ, CO, CO₂ and O₂;
- compressing a gas in the first compression system, thereby generating a compressed gas, particularly wherein at least one compression unit of the first compression system is located upstream the second treatment unit; and
- reacting a compressed synthesis gas in the ammonia synthesis unit, thereby generating ammonia.

The method is characterized in that part of the compressing step is performed before the treating step, or stated differently, wherein the step of compressing a gas is performed in the at least one compression unit upstream of the second treatment unit. In particular embodiments, the second part of the tail gas or the synthesis gas is compressed in the at least one compression unit upstream of the second treatment unit, and the compressed second part of the tail gas or the compressed synthesis gas is subsequently treated in the second treatment unit.

The inventor has found that by performing part of the compression step before the treating step, heat is provided by the gas leaving this compression unit upstream the second treatment unit and can be utilised in operating the second treatment unit, which means that the energy requirement for the operation the second treatment unit is reduced.

Therefore, the method of the disclosure allows for the optimization of the energy requirements associated with the recirculation of the nitric acid tail gas in ammonia production.

Along with the second treatment unit, it is possible to have a methanator either upstream of the second treatment unit or downstream of the second treatment unit. The methanator can convert remaining CO and CO₂ into methane to further reduce the quantity of atomic oxygen to enter the ammonia synthesis unit. In case the methanator is located upstream of the second treatment unit, the heat generated by the treatment in the methanator and provided by the gas product at the outlet of the methanator can be utilised in the treatment in the second treatment unit. In case the methanator is located downstream of the second treatment unit, the heat generated by the treatment in the methanator and provided by the gas product at the outlet of the methanator can be recovered, for example through a heat exchange system, and supplied to the second treatment.

In particular, the nitric acid tail gas is also recirculated within the nitric acid plant. This is achieved by mixing part of the nitric acid tail gas with an oxygen containing gas such as to achieve a nitric acid tail gas containing gas that has a sufficient oxygen content to be fed to the ammonia oxidation burner and/or to the nitric acid absorption tower, such that the conversion of ammonia into nitric oxide and the absorption of NOₓ gases to provide nitric acid can proceed at the desired efficiency.

By feeding the nitric acid tail gas and oxygen to the ammonia oxidation burner or to the nitric acid absorption tower, the power on the air compressor is reduced and the emissions to the air are lowered.

In one embodiment according to the method of the disclosure, the method further comprises the step of providing nitrogen to the synthesis gas, and the nitrogen is produced by an air separation unit.

The method of the disclosure allows for the use of nitrogen gas provided by an air separation unit. In this manner, the production of ammonia does not need to be synchronised with the nitric acid production. This means that the production of ammonia does not depend on the production of the tail gas by the nitric acid production plant. In the event that the nitric acid production is disrupted, for example because an emergency stop or maintenance is required within the nitric acid production plant, with the operation of the air separation unit, nitrogen gas is still supplied and the ammonia production plant can still be operated and ammonia can still be produced.

In one embodiment according to the method of the disclosure, only part of the hydrogen gas is mixed with the second part of the tail gas in the mixing step, and the remaining part of the hydrogen gas is separately compressed in the second compression system.

In another embodiment according to the method of the disclosure, all the hydrogen gas produced by the water electrolyzer is mixed with the second part of the tail gas in the mixing step.

Therefore, the method of the disclosure is flexible such as to allow control on the amount of the hydrogen gas that is treated along with the second part of the tail gas in the second treatment unit. This means that the system can be controlled depending upon the residual CO, CO₂ and O₂ gases in the hydrogen gas. Indeed, if such residual amounts require full treatment of the hydrogen gas through the second treatment, it can be fully treated along with the second part of the tail gas. In the absence of an additional compression of the hydrogen gas not being directly mixed with the second part of the tail gas, the operation of the system is simplified.

However, if it is not required to perform full treatment of the hydrogen gas in the second treatment unit, such as to achieve a synthesis gas suitable for being processed in the ammonia synthesis unit, then only part of the hydrogen gas can be treated in the second treatment unit.

Further, through the compression of the hydrogen gas not being directly mixed with the second part of the tail gas, the pressure of the combined hydrogen gas-second part of the tail gas can be better controlled prior to the final compression of the combined gas such that is suitable for conversion in the ammonia synthesis unit. This means that, overall, the pressure of the synthesis gas entering the ammonia synthesis unit is better controlled, resulting in turn in control of the actual ammonia synthesis in the ammonia synthesis unit.

According to the method of the disclosure, the method further comprises the steps of exchanging heat between the synthesis gas and a coolant or between the second part of the tail gas and a coolant in the first cooling unit, thereby obtaining the first heated coolant and providing heat from the first heated coolant to the second treatment unit and/or exchanging heat between the synthesis gas and a coolant in the second cooling unit, thereby obtaining the second heated coolant and providing heat from the second heated coolant to the second treatment unit.

With the presence of the first cooling unit, the gas that has to be compressed in the remaining compression unit is colder, which means that less power is required to operate the compression unit. Further, the first heated coolant can supply heat to the second treatment unit which means that the heat in the process is properly used for the operation of the second treatment unit to which, consequently, less heat has to be supplied. With the presence of the second cooling unit, the gas that has to be compressed in any remaining compression unit is colder, which means that less power is required to operate the remaining compression unit. Further, the second heated coolant can supply heat to the second treatment unit which means that the heat in the process is properly used for the operation of the second treatment unit to which, consequently, less heat has to be supplied. In particular, the synthesis gas is cooled to a temperature of 50 °C or less. More in particular, the synthesis gas is cooled to a temperature ranging from 10 to 50 °C.

In one embodiment according to the method of the disclosure, the second part of the tail gas mixed with the hydrogen gas in the mixing step is part of the tail gas upstream the means for heating, i.e. between the absorption tower and the means for heating, and/or is part of the tail gas downstream the means for heating and upstream the first treatment unit, i.e. between the means for heating and the first treatment unit, and/or is part of the tail gas downstream the first treatment unit, i.e. between the first treatment unit and the tail gas expander.

The method is, hence, flexible such as to allow the control over the temperature and chemical content in atomic oxygen of the second part of the tail gas. Therefore, the method allows the control of the chemical content in atomic oxygen of the second part of the tail gas, hence allowing the control on the required treatment in the second treatment unit. Further, the method allows for the control of the temperature of the second part of the tail gas, thereby allowing the control of the treatment in the second treatment unit and also on the power required to operate the remaining compression units of the first compression system.

In one embodiment according to the method of the disclosure, the method further comprises the steps of producing hydrogen from a hydrocarbon through steam reforming in the hydrogen production unit through the steps of reforming the hydrocarbon in the steam reforming unit into carbon monoxide and hydrogen gas, converting the carbon monoxide and hydrogen provided by the steam reforming unit into carbon dioxide and hydrogen gas in the shift conversion unit, and removing carbon dioxide from the carbon dioxide and hydrogen gas provided by the shift conversion unit in the carbon dioxide removal unit; and providing the hydrogen to the synthesis gas.

As defined herein, a steam reforming unit is a conventional steam reforming unit (SMR) comprising a primary reforming unit and a secondary reforming unit located downstream the primary reforming unit, or a conventional autothermal reforming unit (ATR) fed by oxygen-enriched air, that is air with above 21% oxygen gas, or pure oxygen gas, the ATR unit being located downstream a conventional fire heater.

The system of the disclosure is flexible such that not all of the hydrogen gas being mixed with the second part of the tail gas has to be produced through a water electrolyser and it can be produced through a conventional SMR or ATR ammonia production plant, involving the treatment of a hydrocarbon with steam and oxygen.

As the transition towards the production of hydrogen solely through the use of a water electrolyser is going to require time, during this transition hydrogen will be produced by a mixture of water electrolysis and SMR or ATR. This means that the hydrogen production system will be a hybrid system comprising a water electrolyser and an SMR or an ATR and it is important that the system of the disclosure is operable with hydrogen gas being produced by such a hybrid system.

In one embodiment according to the method of the disclosure, the treatment of the first and/or the second part of the tail gas is performed through combined selective catalytic reduction and de-oxygenation in the selective catalytic reduction unit combined with a de-oxygenation unit, or through non-selective catalytic reduction in the non-selective catalytic reduction unit, and, in particular, the selective catalytic reduction is performed using the ammonia generated by the ammonia synthesis unit, or the non-selective catalytic reduction is performed using the hydrogen gas generated by the water electrolyzer or by the hydrogen production unit, or using the ammonia generated by the ammonia synthesis unit, or using a hydrocarbon.

In one embodiment according to the method of the disclosure, the treatment of the first and/or the second part of the tail gas is performed through combined selective catalytic reduction and de-oxygenation in the selective catalytic reduction unit combined with a de-oxygenation unit, or through non-selective catalytic reduction in the non-selective catalytic reduction unit, and, in particular, the selective catalytic reduction is performed using the ammonia generated by the ammonia synthesis unit, or the non-selective catalytic reduction is performed using the hydrogen gas generated by the water electrolyzer or by the hydrogen production unit, or using the ammonia generated by the ammonia synthesis unit, or using a hydrocarbon, such as methane. The advantage of using hydrogen is that it is carbon emission-free.

The method of the disclosure allows for both the first and the second part of the tail gas to be treated by either a non-selective catalytic reduction unit (SNCR), a selective catalytic reduction unit (SCR) combined with a de-oxygenation unit, or a combination thereof.

Therefore, the method allows to advantageously make use of both the benefits of a non-selective catalytic reduction unit including lower operating costs compared with SCR, lower costs associated with the replacement of catalysts and easy retrofitting of components in the large scale boiler units, resulting in little downtime, and the benefits of an SCR including NOₓ reduction up to 90%.

In the case of the use of an SCR treatment, the de-oxygenation treatment is performed downstream the SCR treating step and has to reduce the content of oxygen gas to reach a content of atomic oxygen of 10 ppm or less. That is because water can be very easily removed during the compression stage, in order to cool the gas stream to be compressed, through the introduction of liquid ammonia into the stream which absorbs it with a very strong affinity.

An advantage of the method of the disclosure is that, considering that the method provides a hydrogen gas and an ammonia gas, a source of a clean fuel, that is a fuel the use of which results in reduced green-house gas emissions generated by the combustion of the fuel, is produced.

In the event of a hybrid plant utilising a hydrocarbon gas in an SMR or ATR treatment, an advantage is that a source of fuel, such as a hydrocarbon, is already produced by the method and, hence, no additional source of fuel has to be produced to be supplied the second treatment unit. Such advantage is also present when hydrogen or ammonia is supplied as fuel to the second treatment unit since, as mentioned above, hydrogen gas and ammonia gas are also part of the method.

In one aspect of the disclosure, a method for revamping an ammonia production plant comprising a water electrolyzer for generating a hydrogen gas and an oxygen gas, a first compression system for compressing a synthesis gas comprising hydrogen gas and nitrogen gas, comprising several compression units, for generating a compressed synthesis gas, and an ammonia synthesis unit for reacting the compressed synthesis gas, thereby generating ammonia, is disclosed, particularly thereby obtaining a system for the combined production of nitric acid and ammonia according to the present disclosure.

The method comprises the steps of introducing a means for mixing the hydrogen gas and a second part of a tail gas generated in a nitric acid production plant, thereby generating a synthesis gas, the nitric acid production plant comprising an absorption tower for absorbing NOₓ gases, thereby generating nitric acid and a tail gas comprising nitrogen, NOₓ and O₂ gases; a tail gas expander for expanding at least a first part of the tail gas, thereby recovering energy from the tail gas; a first treatment unit upstream of the tail gas expander, for treating at least the first part of the tail gas, particularly for removing NOₓ from the first part of the tail gas, such that the at least first part of the tail gas provided to the tail gas expander comprises 100 ppm by volume or less NOₓ, and means for heating upstream of the first treatment unit, for heating at least the first part of the tail gas; and introducing a second treatment unit for removing NOₓ, CO, CO₂ and O₂ from the second part of the tail gas or from the synthesis gas, upstream or downstream of the means for mixing, for respectively generating a second part of the tail gas comprising less than 10 ppm of atomic oxygen or a synthesis gas comprising less than 10 ppm of atomic oxygen.

The method is characterised in that the second treatment unit is introduced downstream of at least one of the several compression units.

Stated differently, a method for revamping an existing ammonia production plant is disclosed, wherein the existing ammonia production plant comprises:
∘ a water electrolyzer for generating a hydrogen gas and an oxygen gas;
∘ a first compression system for compressing a synthesis gas comprising hydrogen gas and nitrogen gas, said compression system comprising several compression units, for generating a compressed synthesis gas; and
∘ an ammonia synthesis unit for reacting the compressed synthesis gas, thereby generating ammonia;
wherein the method comprises the steps of:
∘ introducing a second part of a tail gas generated in a nitric acid production plant in the ammonia production plant;
∘ introducing a means for mixing the hydrogen gas and the second part of a tail gas, thereby generating a synthesis gas;
∘ introducing a second treatment unit upstream or downstream of the means for mixing and wherein at least one compression unit of the first compression system is located upstream of the second treatment unit, wherein said second treatment unit is configured for removing NOₓ, CO, CO₂ and O₂ from a gas stream and for generating a gas stream comprising less than 10 ppm of atomic oxygen.

In particular embodiments, the method comprises the step of introducing a compression unit and a second treatment unit downstream of the compression unit and upstream of the mixing unit, for removing NOₓ, CO, CO₂ and O₂ from the second part of the tail gas and for generating a compressed second part of the tail gas comprising less than 10 ppm of atomic oxygen.

In particular embodiments, the method comprises the step of introducing a second treatment unit for removing NOₓ, CO, CO₂ and O₂ from the synthesis gas, downstream of the means for mixing and downstream of a compression unit of the first compression system, for generating a compressed synthesis gas comprising less than 10 ppm of atomic oxygen.

In one aspect of the disclosure, the use of the system of the disclosure for performing the method of the disclosure is disclosed.

### Example

Reference is made to Figure 1. Nitric acid was produced in a nitric acid production plant. The tail gas leaving the absorber 1 of the nitric acid production plant was split into a first tail gas stream 2 and a second tail gas stream 3 having identical chemical compositions. The first tail gas stream 2 was heated in a heating unit 4. The gas stream leaving the unit 4 was subsequently treated in a first treatment unit 5, which particularly is a non-selective catalytic reduction unit, such as to achieve a gas stream that contained less than 100 ppm NOₓ. This gas stream leaving the non-selective catalytic reduction unit was used for rotating a tail gas turbine 6 connected to a generator (not shown), which generated electricity, and the gas leaving the tail gas turbine was vented to the atmosphere. In a water electrolyser 7, from water 8 and electricity 9, hydrogen gas 10 and oxygen gas 11 were generated. The second tail gas stream 3 and the hydrogen gas 10 were mixed and compressed in a compressor 12 to generate a compressed synthesis gas 13 having a temperature of up to 300 °C. The compressed synthesis gas 13 was treated in a second treatment unit 14, which particularly is a non-selective catalytic reduction unit, at a temperature ranging from 450 to 650 °C, such as to generate a compressed and treated generated synthesis gas containing less than 10 ppm of atomic oxygen. Due to the temperature of the compressed synthesis gas 13, less heat had to be supplied to the second non-selective catalytic reduction unit 14. No further treatment for removing traces of water was performed. Remaining amounts of CO and CO₂ were converted into methane into a methanator (not shown). Next, the compressed and treated synthesis gas was converted into ammonia 17 in an ammonia synthesis unit 16 after further compression to 130 bar in a compressor (not shown) that comprised a liquid ammonia wash cooling system. Part of the hydrogen gas leaving the electrolyser 7 and not mixed with the second part of the tail gas stream 3 may be used as a reductant 18 in non-selective catalytic reduction or be burnt as fuel to provide heat.

## Claims

1. A system for combined nitric acid and ammonia production comprising:
• a nitric acid plant for producing nitric acid comprising:
∘ an absorption tower (1) for absorbing NOₓ gases, thereby generating nitric acid and a tail gas comprising nitrogen, NOₓ and O₂ gases;
∘ a tail gas expander (6) configured for expanding a first part of the tail gas, thereby recovering energy from the first part of the tail gas;
∘ a first treatment unit (5) located upstream of the tail gas expander (6) for removing NOₓ from at least the first part of the tail gas, such that the first part of the tail gas provided to the tail gas expander (6) comprises 100 ppm by volume or less NOₓ; and
∘ means for heating (4) upstream of the first treatment unit (5), for heating at least the first part of the tail gas; and
• an ammonia production plant for producing ammonia and comprising:
∘ a water electrolyzer (7) for generating a hydrogen gas and an oxygen gas;
∘ a means for mixing at least a first part of the hydrogen gas and a second part of the tail gas, thereby generating a synthesis gas;
∘ a first compression system comprising one or several compression units and generating a compressed synthesis gas or a compressed second part of the tail gas;
∘ a second treatment unit (14) for removing NOₓ, CO, CO₂ and O₂ from the compressed synthesis gas or from the compressed second part of the tail gas, wherein the second treatment unit (14) is located upstream or downstream of the means for mixing, for generating a gas stream comprising less than 10 ppm by volume of atomic oxygen in total as NOₓ, CO, CO₂ and O₂; and
∘ an ammonia synthesis unit (16) for reacting a compressed synthesis gas, thereby generating ammonia;
wherein at least one compression unit of the first compression system is located upstream the second treatment unit (14);
wherein the first compression system further comprises at least one compression unit downstream of the second treatment unit (14) and:
• wherein the system further comprises a first cooling unit between the second treatment unit (14) and the at least one compression unit downstream of the second treatment unit (14), wherein the first cooling unit is configured to exchange heat between the synthesis gas and a coolant or between the second part of the tail gas and a coolant, thereby obtaining a first heated coolant, and wherein the first cooling unit is further configured to provide the first heated coolant to the second treatment unit (14); and/or
• wherein the system comprises a second cooling unit downstream the at least one compression unit downstream of the second treatment unit (14), wherein the second cooling unit is configured to exchange heat between the synthesis gas and a coolant, thereby obtaining a second heated coolant, and wherein the second cooling unit is further configured to provide the second heated coolant to the second treatment unit (14).

2. The system according to claim 1, further comprising an air separation unit configured to provide nitrogen to the synthesis gas.

3. The system according to any one of claims 1 to 2, wherein, in the means for mixing, the first part of the hydrogen gas is mixed with the second part of the tail gas, and wherein the system further comprises a second compression system configured for compressing a second part of the hydrogen gas; or
wherein, in the means for mixing all the hydrogen gas generated by the water electrolyzer (7) is mixed with the second part of the tail gas.

4. The system according to any one of claims 1 to 3, wherein the means for mixing is in direct fluid communication with the second part of the tail gas upstream the means for heating (4), and/or with the second part of the tail gas downstream the means for heating (4) and upstream the first treatment unit (5), and/or with the second part of the tail gas downstream the first treatment unit (5).

5. The system according to any one of claims 1 to 4, further comprising a hydrogen production unit comprising:
• a steam reforming unit for converting a hydrocarbon into carbon monoxide and hydrogen gas;
• a shift conversion unit for converting the carbon monoxide and hydrogen provided by the steam reforming unit into carbon dioxide and hydrogen gas; and
• a carbon dioxide removal unit for removing carbon dioxide from the carbon dioxide and hydrogen gas provided by the shift conversion unit;
wherein the hydrogen production unit is configured to provide hydrogen to the synthesis gas.

6. The system according to any one of claims 1 to 5, wherein the first and/or the second treatment unit (5, 14) is either a non-selective catalytic reduction unit or a selective catalytic reduction unit combined with a dedicated de-oxygenation unit, in particular wherein the selective catalytic reduction unit is supplied with the ammonia generated by the ammonia synthesis unit (16), or wherein the non-selective catalytic reduction unit is supplied with the hydrogen gas generated by the water electrolyzer (7) or by the carbon dioxide removal unit, with the ammonia generated by the ammonia synthesis unit (16), or with a hydrocarbon.

7. A method for the combined production of nitric acid and ammonia, performed in a system according to the system of any one of claims 1 to 6, comprising the steps of:
• producing a tail gas in the nitric acid plant;
• mixing hydrogen gas and a second part of the tail gas, thereby generating a synthesis gas;
• treating the second part of the tail gas or the synthesis gas in the second treatment unit (14);
• compressing a gas in a first compression system wherein at least one compression unit of the first compression system is located upstream the second treatment unit (14), thereby generating a compressed gas;
• exchanging heat between the synthesis gas or the second part of the tail gas and a coolant in a first cooling unit, thereby obtaining the first heated coolant and providing heat from the first heated coolant to the second treatment unit (14); and/or exchanging heat between the synthesis gas and a coolant in the second cooling unit, thereby obtaining the second heated coolant and providing heat from the second heated coolant to the second treatment unit (14); and
• reacting compressed synthesis gas in the ammonia synthesis unit (16), thereby generating ammonia;
**characterized in that** part of the step of compressing a gas is performed in the at least one compression unit upstream of the second treatment unit (14), particularly wherein the second part of the tail gas or the synthesis gas is compressed in the at least one compression unit upstream of the second treatment unit (14).

8. The method according to claim 7, further comprising the step of providing nitrogen to the synthesis gas, wherein the nitrogen is produced by an air separation unit.

9. The method according to claim 7 or 8, wherein only part of the hydrogen gas, produced by a water electrolyzer (7), is mixed with the second part of the tail gas in the mixing step, and wherein the remaining part of the hydrogen gas is separately compressed in a second compression system; or wherein all the hydrogen gas produced by the water electrolyzer (7) is mixed with the second part of the tail gas in the mixing step.

10. The method according to any one of claims 7 to 9, wherein, the second part of the tail gas mixed in the mixing step with the hydrogen gas is part of the tail gas upstream the means for heating (4), and/or is part of the tail gas downstream the means for heating (4) and upstream the first treatment unit (5), and/or is part of the tail gas downstream the first treatment unit (5).

11. The method according to any one of claims 7 to 10, further comprising the steps of:
• producing hydrogen from a hydrocarbon through steam reforming in the hydrogen production unit through the steps of:
∘ reforming the hydrocarbon in the steam reforming unit into carbon monoxide and hydrogen gas;
∘ converting the carbon monoxide and hydrogen provided by the steam reforming unit into carbon dioxide and hydrogen gas in the shift conversion unit; and
∘ removing carbon dioxide from the carbon dioxide and hydrogen gas provided by the shift conversion unit in the carbon dioxide removal unit; and
• providing the hydrogen to the synthesis gas.

12. The method according to any one of claims 7 to 11, wherein the treatment of the first and/or the second part of the tail gas is performed through combined selective catalytic reduction and de-oxygenation in the selective catalytic reduction unit combined with a de-oxygenation unit, or through non-selective catalytic reduction in the non-selective catalytic reduction unit, in particular wherein the selective catalytic reduction is performed using the ammonia generated by the ammonia synthesis unit (16), or wherein the non-selective catalytic reduction is performed using the hydrogen gas generated by the water electrolyzer (7) or by the hydrogen production unit, or using the ammonia generated by the ammonia synthesis unit (16), or using a hydrocarbon.

13. A method for revamping an existing ammonia production plant into a system according to any one of claims 1 to 6,
wherein the existing ammonia production plant comprises:
∘ a water electrolyzer (7) for generating a hydrogen gas and an oxygen gas;
∘ a first compression system for compressing a synthesis gas comprising hydrogen gas and nitrogen gas, said compression system comprising several compression units, for generating a compressed synthesis gas; and
∘ an ammonia synthesis unit (16) for reacting the compressed synthesis gas, thereby generating ammonia;
wherein the method comprises the steps of:
∘ introducing a second part of a tail gas generated in a nitric acid production plant in the ammonia production plant;
∘ introducing a means for mixing the hydrogen gas and the second part of a tail gas, thereby generating a synthesis gas,
∘ introducing a second treatment unit (14) upstream or downstream of the means for mixing and wherein at least one compression unit of the first compression system is located upstream of the second treatment unit (14), wherein said second treatment unit (14) is configured for removing NOₓ, CO, CO₂ and O₂ from a gas stream and for generating a gas stream comprising less than 10 ppm of atomic oxygen,
wherein the first compression system further comprises at least one compression unit downstream of the second treatment unit and further comprises:
• a first cooling unit between the second treatment unit (14) and the at least one compression unit downstream of the second treatment unit (14), wherein the first cooling unit is configured to exchange heat between the synthesis gas and a coolant or between the second part of the tail gas and a coolant, thereby obtaining a first heated coolant, and wherein the first cooling unit is further configured to provide the first heated coolant to the second treatment unit (14); and/or
• a second cooling unit downstream the at least one compression unit downstream of the second treatment unit (14), wherein the second cooling unit is configured to exchange heat between the synthesis gas and a coolant, thereby obtaining a second heated coolant, and wherein the second cooling unit is further configured to provide the second heated coolant to the second treatment unit (14).

## Patentansprüche

1. System zur kombinierten Salpetersäure- und Ammoniakherstellung, umfassend:
• eine Salpetersäureanlage zum Herstellen von Salpetersäure, umfassend:
∘ einen Absorptionsturm (1) zum Absorbieren von NO_{X}-Gasen, wodurch Salpetersäure und ein Stickstoff, NO_{X} und O₂-Gase umfassendes Abgas erzeugt werden;
∘ einen Abgasexpander (6), der dazu ausgestaltet ist, einen ersten Teil des Abgases zu expandieren, wodurch Energie aus dem ersten Teil des Abgases zurückgewonnen wird;
∘ eine erste Behandlungseinheit (5), die dem Abgasexpander (6) vorgelagert angeordnet ist, zum Entfernen von NO_{X} zumindest aus dem ersten Teil des Abgases, sodass der erste Teil des Abgases, der dem Abgasexpander (6) bereitgestellt wird, 100 ppm, bezogen auf das Volumen, oder weniger NO_{X} umfasst; und
∘ Mittel zum Erwärmen (4), das der ersten Behandlungseinheit (5) vorgelagert ist, zum Erwärmen zumindest des ersten Teils des Abgases; und
• eine Ammoniakherstellungsanlage zum Herstellen von Ammoniak, umfassend:
∘ einen Wasserelektrolyseur (7) zum Erzeugen eines Wasserstoffgases und eines Sauerstoffgases;
∘ ein Mittel zum Mischen zumindest eines ersten Teils des Wasserstoffgases und eines zweiten Teils des Abgases, wodurch ein Synthesegas erzeugt wird;
∘ ein erstes Kompressionssystem, das eine oder mehrere Kompressionseinheiten umfasst und ein komprimiertes Synthesegas oder einen komprimierten zweiten Teil des Abgases erzeugt;
∘ eine zweite Behandlungseinheit (14) zum Entfernen von NO_{X}, CO, CO₂ und O₂ aus dem komprimierten Synthesegas oder aus dem komprimierten zweiten Teil des Abgases, wobei die zweite Behandlungseinheit (14) dem Mittel zum Mischen vorgelagert oder nachgelagert angeordnet ist, zum Erzeugen eines Gasstroms, der insgesamt weniger als 10 ppm, bezogen auf das Volumen, atomaren Sauerstoff als NO_{X}, CO, CO₂ und O₂ umfasst; und
∘ eine Ammoniaksyntheseeinheit (16) zum Umsetzen eines komprimierten Synthesegases, wodurch Ammoniak erzeugt wird;
wobei mindestens eine Kompressionseinheit des ersten Kompressionssystems der zweiten Behandlungseinheit (14) vorgelagert angeordnet ist;
wobei das erste Kompressionssystem ferner mindestens eine Kompressionseinheit umfasst, die der zweiten Behandlungseinheit (14) nachgelagert ist, und:
• wobei das System ferner eine erste Kühleinheit zwischen der zweiten Behandlungseinheit (14) und der mindestens einen Kompressionseinheit umfasst, die der zweiten Behandlungseinheit (14) nachgelagert ist, wobei die erste Kühleinheit dazu ausgestaltet ist, Wärme zwischen dem Synthesegas und einem Kühlmittel oder zwischen dem zweiten Teil des Abgases und einem Kühlmittel auszutauschen, wodurch ein erstes erwärmtes Kühlmittel erhalten wird, und wobei die erste Kühleinheit ferner dazu ausgestaltet ist, das erste erwärmte Kühlmittel der zweiten Behandlungseinheit (14) bereitzustellen; und/oder
• wobei das System eine zweite Kühleinheit, die der mindestens einen Kompressionseinheit nachgelagert ist, die der zweiten Behandlungseinheit (14) nachgelagert ist, umfasst, wobei die zweite Kühleinheit dazu ausgestaltet ist, Wärme zwischen dem Synthesegas und einem Kühlmittel auszutauschen, wodurch ein zweites erwärmtes Kühlmittel erhalten wird, und wobei die zweite Kühleinheit ferner dazu ausgestaltet ist, das zweite erwärmte Kühlmittel der zweiten Behandlungseinheit (14) bereitzustellen.

2. System nach Anspruch 1, ferner umfassend eine Lufttrennungseinheit, die dazu ausgestaltet ist, dem Synthesegas Stickstoff bereitzustellen.

3. System nach einem der Ansprüche 1 bis 2, wobei in dem Mittel zum Mischen der erste Teil des Wasserstoffgases mit dem zweiten Teil des Abgases gemischt wird und wobei das System ferner ein zweites Kompressionssystem umfasst, das dazu ausgestaltet ist, einen zweiten Teil des Wasserstoffgases zu komprimieren; oder
wobei in dem Mittel zum Mischen sämtliches durch den Wasserelektrolyseur (7) erzeugtes Wasserstoffgas mit dem zweiten Teil des Abgases gemischt wird.

4. System nach einem der Ansprüche 1 bis 3, wobei das Mittel zum Mischen in direkter Fluidverbindung mit dem zweiten Teil des Abgases, das dem Mittel zum Erwärmen (4) vorgelagert ist, und/oder mit dem zweiten Teil des Abgases, das dem Mittel zum Erwärmen (4) nachgelagert und der ersten Behandlungseinheit (5) vorgelagert ist, und/oder mit dem zweiten Teil des Abgases, das der ersten Behandlungseinheit (5) nachgelagert ist, steht.

5. System nach einem der Ansprüche 1 bis 4, ferner umfassend eine Wasserstoffherstellungseinheit, umfassend:
• eine Dampfreformierungseinheit zum Umwandeln eines Kohlenwasserstoffs in Kohlenstoffmonoxid und Wasserstoffgas;
• eine Shift-Umwandlungseinheit zum Umwandeln des durch die Dampfreformierungseinheit bereitgestellten Kohlenstoffmonoxids und Wasserstoffs in Kohlenstoffdioxid und Wasserstoffgas; und
• eine Kohlenstoffdioxidentfernungseinheit zum Entfernen von Kohlenstoffdioxid aus dem durch die Shift-Umwandlungseinheit bereitgestellten Kohlenstoffdioxid und Wasserstoffgas;
wobei die Wasserstoffherstellungseinheit dazu ausgestaltet ist, dem Synthesegas Wasserstoff bereitzustellen.

6. System nach einem der Ansprüche 1 bis 5, wobei die erste und/oder die zweite Behandlungseinheit (5, 14) entweder eine Einheit zur nichtselektiven katalytischen Reduktion oder eine Einheit zur selektiven katalytischen Reduktion ist, die mit einer dedizierten Desoxygenierungseinheit kombiniert ist, wobei die Einheit zur selektiven katalytischen Reduktion insbesondere mit dem durch die Ammoniaksyntheseeinheit (16) erzeugten Ammoniak versorgt wird oder wobei die Einheit zur nichtselektiven katalytischen Reduktion mit dem durch den Wasserelektrolyseur (7) oder durch die Kohlenstoffdioxidentfernungseinheit erzeugten Wasserstoffgas, mit dem durch die Ammoniaksyntheseeinheit (16) erzeugten Ammoniak oder mit einem Kohlenwasserstoff versorgt wird.

7. Verfahren zur kombinierten Salpetersäure- und Ammoniakherstellung, das in einem System gemäß dem System nach einem der Ansprüche 1 bis 6 durchgeführt wird, umfassend die folgenden Schritte:
• Herstellen eines Abgases in der Salpetersäureanlage;
• Mischen von Wasserstoffgas und einem zweiten Teil des Abgases, wodurch ein Synthesegas erzeugt wird;
• Behandeln des zweiten Teils des Abgases oder des Synthesegases in der zweiten Behandlungseinheit (14);
• Komprimieren eines Gases in einem ersten Kompressionssystem, wobei mindestens eine Kompressionseinheit des ersten Kompressionssystems der zweiten Behandlungseinheit (14) vorgelagert angeordnet ist, wodurch ein komprimiertes Gas erzeugt wird;
• Austauschen von Wärme zwischen dem Synthesegas oder dem zweiten Teil des Abgases und einem Kühlmittel in einer ersten Kühleinheit, wodurch das erste erwärmte Kühlmittel erhalten wird und der zweiten Behandlungseinheit (14) Wärme von dem ersten erwärmten Kühlmittel bereitgestellt wird; und/oder Austauschen von Wärme zwischen dem Synthesegas und einem Kühlmittel in der zweiten Kühleinheit, wodurch das zweite erwärmte Kühlmittel erhalten wird und der zweiten Behandlungseinheit (14) Wärme von dem zweiten erwärmten Kühlmittel bereitgestellt wird; und
• Umsetzen von komprimiertem Synthesegas in der Ammoniaksyntheseeinheit (16), wodurch Ammoniak erzeugt wird;
**dadurch gekennzeichnet, dass** ein Teil des Schritts des Komprimierens eines Gases in der mindestens einen Kompressionseinheit, die der zweiten Behandlungseinheit (14) vorgelagert ist, durchgeführt wird, wobei der zweite Teil des Abgases oder das Synthesegas insbesondere in der mindestens einen Kompressionseinheit, die der zweiten Behandlungseinheit (14) vorgelagert ist, komprimiert wird.

8. Verfahren nach Anspruch 7, ferner umfassend den Schritt, in dem dem Synthesegas Stickstoff bereitgestellt wird, wobei der Stickstoff durch eine Lufttrennungseinheit hergestellt wird.

9. Verfahren nach Anspruch 7 oder 8, wobei nur ein Teil des durch einen Wasserelektrolyseur (7) hergestellten Wasserstoffgases in dem Mischschritt mit dem zweiten Teil des Abgases gemischt wird und wobei der restliche Teil des Wasserstoffgases separat in einem zweiten Kompressionssystem komprimiert wird; oder wobei sämtliches durch den Wasserelektrolyseur (7) hergestelltes Wasserstoffgas in dem Mischschritt mit dem zweiten Teil des Abgases gemischt wird.

10. Verfahren nach einem der Ansprüche 7 bis 9, wobei der zweite Teil des in dem Mischschritt mit dem Wasserstoffgas gemischten Abgases Teil des Abgases ist, das dem Mittel zum Erwärmen (4) vorgelagert ist, und/oder Teil des Abgases ist, das dem Mittel zum Erwärmen (4) nachgelagert und der ersten Behandlungseinheit (5) vorgelagert ist, und/oder Teil des Abgases ist, das der ersten Behandlungseinheit (5) nachgelagert ist.

11. Verfahren nach einem der Ansprüche 7 bis 10, ferner umfassend die folgenden Schritte, in denen:
• Wasserstoff aus einem Kohlenwasserstoff durch Dampfreformierung in der Wasserstoffherstellungseinheit durch die folgenden Schritte hergestellt wird:
∘ Reformieren des Kohlenwasserstoffs zu Kohlenstoffmonoxid und Wasserstoffgas in der Dampfreformierungseinheit;
∘ Umwandeln des durch die Dampfreformierungseinheit bereitgestellten Kohlenstoffmonoxids und Wasserstoffs in Kohlenstoffdioxid und Wasserstoffgas in der Shift-Umwandlungseinheit; und
∘ Entfernen von Kohlenstoffdioxid aus dem durch die Shift-Umwandlungseinheit bereitgestellten Kohlenstoffdioxid und Wasserstoffgas in der Kohlenstoffdioxidentfernungseinheit; und
• der Wasserstoff dem Synthesegas bereitgestellt wird.

12. Verfahren nach einem der Ansprüche 7 bis 11, wobei die Behandlung des ersten und/oder des zweiten Teils des Abgases durch kombinierte selektive katalytische Reduktion und Desoxygenierung in der Einheit zur selektiven katalytischen Reduktion, die mit einer Desoxygenierungseinheit kombiniert ist, oder durch nichtselektive katalytische Reduktion in der Einheit zur nichtselektiven katalytischen Reduktion durchgeführt wird, wobei die selektive katalytische Reduktion insbesondere unter Verwendung des durch die Ammoniaksyntheseeinheit (16) erzeugten Ammoniaks durchgeführt wird oder wobei die nichtselektive katalytische Reduktion unter Verwendung des durch den Wasserelektrolyseur (7) oder durch die Wasserstoffherstellungseinheit erzeugten Wasserstoffgases oder unter Verwendung des durch die Ammoniaksyntheseeinheit (16) erzeugten Ammoniaks oder unter Verwendung eines Kohlenwasserstoffs durchgeführt wird.

13. Verfahren zum Umrüstung einer bestehenden Ammoniakherstellungsanlage zu einem System nach einem der Ansprüche 1 bis 6,
wobei die bestehende Ammoniakherstellungsanlage Folgendes umfasst:
∘ einen Wasserelektrolyseur (7) zum Erzeugen eines Wasserstoffgases und eines Sauerstoffgases;
∘ ein erstes Kompressionssystem zum Komprimieren eines Wasserstoffgas und Stickstoffgas umfassenden Synthesegases, wobei das Kompressionssystem mehrere Kompressionseinheiten umfasst, zum Erzeugen eines komprimierten Synthesegases; und
∘ eine Ammoniaksyntheseeinheit (16) zum Umsetzen des komprimierten Synthesegases, wodurch Ammoniak erzeugt wird;
wobei das Verfahren die folgenden Schritte umfasst:
∘ Einbringen eines zweiten Teils eines in einer Salpetersäureherstellungsanlage erzeugten Abgases in die Ammoniakherstellungsanlage;
∘ Einbringen eines Mittels zum Mischen des Wasserstoffgases und des zweiten Teils eines Abgases, wodurch ein Synthesegas erzeugt wird,
∘ Einbringen einer zweiten Behandlungseinheit (14), die dem Mittel zum Mischen vorgelagert oder nachgelagert ist, wobei mindestens eine Kompressionseinheit des ersten Kompressionssystems der zweiten Behandlungseinheit (14) vorgelagert angeordnet ist, wobei die zweite Behandlungseinheit (14) dazu ausgestaltet ist, NO_{X}, CO, CO₂ und O₂ aus einem Gasstrom zu entfernen und einen Gasstrom zu erzeugen, der weniger als 10 ppm atomaren Sauerstoff umfasst,
wobei das erste Kompressionssystem ferner mindestens eine Kompressionseinheit umfasst, die der zweiten Behandlungseinheit nachgelagert ist, und ferner Folgendes umfasst:
• eine erste Kühleinheit zwischen der zweiten Behandlungseinheit (14) und der mindestens einen Kompressionseinheit, die der zweiten Behandlungseinheit (14) nachgelagert ist, wobei die erste Kühleinheit dazu ausgestaltet ist, Wärme zwischen dem Synthesegas und einem Kühlmittel oder zwischen dem zweiten Teil des Abgases und einem Kühlmittel auszutauschen, wodurch ein erstes erwärmtes Kühlmittel erhalten wird, und wobei die erste Kühleinheit ferner dazu ausgestaltet ist, das erste erwärmte Kühlmittel der zweiten Behandlungseinheit (14) bereitzustellen; und/oder
• eine zweite Kühleinheit, die der mindestens einen Kompressionseinheit nachgelagert ist, die der zweiten Behandlungseinheit (14) nachgelagert ist, wobei die zweite Kühleinheit dazu ausgestaltet ist, Wärme zwischen dem Synthesegas und einem Kühlmittel auszutauschen, wodurch ein zweites erwärmtes Kühlmittel erhalten wird, und wobei die zweite Kühleinheit ferner dazu ausgestaltet ist, das zweite erwärmte Kühlmittel der zweiten Behandlungseinheit (14) bereitzustellen.

## Revendications

1. Système pour la production combinée d'acide nitrique et d'ammoniac comprenant :
• une installation d'acide nitrique pour produire de l'acide nitrique comprenant :
∘ une tour d'absorption (1) pour l'absorption de gaz NO_{X}, générant ainsi de l'acide nitrique et un gaz résiduaire comprenant de l'azote, des gaz NO_{X} et O₂ ;
∘ un détendeur de gaz résiduaire (6) configuré pour détendre une première partie du gaz résiduaire, récupérant ainsi de l'énergie de la première partie du gaz résiduaire ;
∘ une première unité de traitement (5) située en amont du détendeur de gaz résiduaire (6) pour éliminer NO_{X} d'au moins la première partie du gaz résiduaire, de sorte que la première partie du gaz résiduaire fourni au détendeur de gaz résiduaire (6) comprenne 100 ppm en volume ou moins de NO_{X} ; et
∘ un moyen de chauffage (4) en amont de la première unité de traitement (5), pour chauffer au moins la première partie du gaz résiduaire ; et
• une installation de production d'ammoniac pour produire de l'ammoniac comprenant :
∘ un électrolyseur d'eau (7) pour générer un gaz d'hydrogène et un gaz d'oxygène ;
∘ un moyen pour mélanger au moins une première partie du gaz d'hydrogène et une deuxième partie du gaz résiduaire, générant ainsi un gaz de synthèse ;
∘ un premier système de compression comportant une ou plusieurs unités de compression et générant un gaz de synthèse comprimé ou une seconde partie comprimée du gaz résiduaire ;
∘ une deuxième unité de traitement (14) pour éliminer NO_{X}, CO, CO₂ et O₂ du gaz de synthèse comprimé ou de la deuxième partie comprimée du gaz résiduaire, dans lequel la deuxième unité de traitement (14) est située en amont ou en aval du moyen de mélange, pour générer un flux de gaz comprenant moins de 10 ppm en volume d'oxygène atomique au total en tant que NO_{X}, CO, CO₂, O₂ ; et
∘ une unité de synthèse d'ammoniac (16) pour la mise en réaction d'un gaz de synthèse comprimé, générant ainsi de l'ammoniac ;
dans lequel au moins une unité de compression du premier système de compression est située en amont de la deuxième unité de traitement (14) ;
dans lequel le premier système de compression comprend en outre au moins une unité de compression en aval de la deuxième unité de traitement (14) et :
• dans lequel le système comporte en outre une première unité de refroidissement entre la deuxième unité de traitement (14) et l'au moins une unité de compression en aval de la deuxième unité de traitement (14), dans lequel la première unité de refroidissement est configurée pour échanger de la chaleur entre le gaz de synthèse et un réfrigérant ou entre la deuxième partie du gaz résiduaire et un réfrigérant, obtenant ainsi un premier réfrigérant chauffé, et dans lequel la première unité de refroidissement est en outre configurée pour fournir le premier réfrigérant chauffé à la deuxième unité de traitement (14) ; et/ou
• dans lequel le système comprend une deuxième unité de refroidissement en aval de l'au moins une unité de compression en aval de la deuxième unité de traitement (14), dans lequel la deuxième unité de refroidissement est configurée pour échanger de la chaleur entre le gaz de synthèse et un réfrigérant, obtenant ainsi un deuxième réfrigérant chauffé, et dans lequel la deuxième unité de refroidissement est en outre configurée pour fournir le deuxième réfrigérant chauffé à la deuxième unité de traitement (14).

2. Système selon la revendication 1, comprenant en outre une unité de séparation d'air configurée pour fournir de l'azote au gaz de synthèse.

3. Système selon l'une quelconque des revendications 1 à 2, dans lequel, dans le moyen de mélange, la première partie du gaz d'hydrogène est mélangée avec la seconde partie du gaz résiduaire, et dans lequel le système comprend en outre un second système de compression configuré pour comprimer une seconde partie du gaz d'hydrogène ; ou
dans lequel, dans le moyen de mélange de tout le gaz d'hydrogène généré par l'électrolyseur d'eau (7) est mélangé avec la seconde partie du gaz résiduaire.

4. Système selon l'une quelconque des revendications 1 à 3, dans lequel le moyen de mélange est en communication fluidique directe avec la deuxième partie du gaz résiduaire en amont du moyen de chauffage (4), et/ou avec la deuxième partie du gaz résiduaire en aval du moyen de chauffage (4) et en amont de la première unité de traitement (5), et/ou avec la deuxième partie du gaz résiduaire en aval de la première unité de traitement (5).

5. Système selon l'une quelconque des revendications 1 à 4, comprenant en outre une unité de production d'hydrogène comprenant :
• une unité de vaporeformage pour convertir un hydrocarbure en monoxyde de carbone et gaz d'hydrogène ;
• une unité de conversion par déplacement pour convertir le monoxyde de carbone et l'hydrogène fournis par l'unité de vaporeformage en dioxyde de carbone et gaz d'hydrogène ; et
• une unité d'élimination du dioxyde de carbone pour éliminer du dioxyde de carbone du dioxyde de carbone et du gaz d'hydrogène fournis par l'unité de conversion par déplacement ;
dans lequel l'unité de production d'hydrogène est configurée pour fournir de l'hydrogène au gaz de synthèse.

6. Système selon l'une quelconque des revendications 1 à 5, dans lequel la première et/ou la deuxième unité de traitement (5, 14) est soit une unité de réduction catalytique non sélective, soit une unité de réduction catalytique sélective combinée à une unité de désoxygénation dédiée, en particulier dans lequel l'unité de réduction catalytique sélective est alimentée avec l'ammoniac généré par l'unité de synthèse d'ammoniac (16), ou dans lequel l'unité de réduction catalytique non sélective est alimentée avec le gaz d'hydrogène généré par l'électrolyseur d'eau (7) ou par l'unité d'élimination du dioxyde de carbone, avec l'ammoniac généré par l'unité de synthèse d'ammoniac (16), ou avec un hydrocarbure.

7. Procédé pour la production combinée d'acide nitrique et d'ammoniac, réalisé dans un système selon le système de l'une quelconque des revendications 1 à 6, comprenant les étapes de :
• production d'un gaz résiduaire dans l'installation d'acide nitrique ;
• mélange du gaz d'hydrogène et d'une seconde partie du gaz résiduaire, générant ainsi un gaz de synthèse ;
• traitement de la deuxième partie du gaz résiduaire ou du gaz de synthèse dans la deuxième unité de traitement (14) ;
• compression d'un gaz dans un premier système de compression dans lequel au moins une unité de compression du premier système de compression est située en amont de la deuxième unité de traitement (14), générant ainsi un gaz comprimé ;
• échange de chaleur entre le gaz de synthèse ou la deuxième partie du gaz résiduaire et un réfrigérant dans une première unité de refroidissement, obtenant ainsi le premier réfrigérant chauffé et fournissant de la chaleur du premier réfrigérant chauffé à la deuxième unité de traitement (14) ; et/ou échange de chaleur entre le gaz de synthèse et un réfrigérant dans la deuxième unité de refroidissement, obtenant ainsi le deuxième réfrigérant chauffé et fournissant de la chaleur du deuxième réfrigérant chauffé à la deuxième unité de traitement (14) ; et
• mise en réaction du gaz de synthèse comprimé dans l'unité de synthèse d'ammoniac (16), générant ainsi de l'ammoniac ;
**caractérisé en ce qu'**une partie de l'étape de compression d'un gaz est réalisée dans l'au moins une unité de compression en amont de la deuxième unité de traitement (14), en particulier dans laquelle la deuxième partie du gaz résiduaire ou le gaz de synthèse est comprimée dans l'au moins une unité de compression en amont de la deuxième unité de traitement (14).

8. Procédé selon la revendication 7, comprenant en outre l'étape de fourniture d'azote au gaz de synthèse, dans lequel l'azote est produit par une unité de séparation d'air.

9. Procédé selon la revendication 7 ou 8, dans lequel seule une partie du gaz d'hydrogène, produit par un électrolyseur d'eau (7), est mélangée avec la seconde partie du gaz résiduaire dans l'étape de mélange, et dans lequel la partie restante du gaz d'hydrogène est comprimée séparément dans un second système de compression ; ou dans lequel tout le gaz d'hydrogène produit par l'électrolyseur d'eau (7) est mélangé avec la seconde partie du gaz résiduaire dans l'étape de mélange.

10. Procédé selon l'une quelconque des revendications 7 à 9, dans lequel la seconde partie du gaz résiduaire mélangée dans l'étape de mélange avec le gaz d'hydrogène fait partie du gaz résiduaire en amont du moyen de chauffage (4), et/ou fait partie du gaz résiduaire en aval du moyen de chauffage (4) et en amont de la première unité de traitement (5), et/ou fait partie du gaz résiduaire en aval de la première unité de traitement (5).

11. Procédé selon l'une quelconque des revendications 7 à 10, comprenant en outre les étapes de :
• production d'hydrogène à partir d'un hydrocarbure par vaporeformage dans l'unité de production d'hydrogène par les étapes de :
∘ reformage de l'hydrocarbure dans l'unité de vaporeformage en monoxyde de carbone et gaz d'hydrogène ;
∘ conversion du monoxyde de carbone et de l'hydrogène fournis par l'unité de vaporeformage en dioxyde de carbone et gaz d'hydrogène dans l'unité de conversion par déplacement ; et
∘ élimination de dioxyde de carbone du dioxyde de carbone et du gaz d'hydrogène fournis par l'unité de conversion par déplacement dans l'unité d'élimination de dioxyde de carbone ; et
• fourniture de l'hydrogène au gaz de synthèse.

12. Procédé selon l'une quelconque des revendications 7 à 11, dans lequel le traitement de la première et/ou de la deuxième partie du gaz résiduaire est effectué par réduction catalytique sélective et désoxygénation combinées dans l'unité de réduction catalytique sélective combinée avec une unité de désoxygénation, ou par réduction catalytique non sélective dans l'unité de réduction catalytique non sélective, en particulier dans lequel la réduction catalytique sélective est effectuée en utilisant l'ammoniac généré par l'unité de synthèse d'ammoniac (16), ou dans lequel la réduction catalytique non sélective est effectuée à l'aide du gaz d'hydrogène généré par l'électrolyseur d'eau (7) ou par l'unité de production d'hydrogène, ou en utilisant l'ammoniac généré par l'unité de synthèse d'ammoniac (16), ou en utilisant un hydrocarbure.

13. Procédé de rénovation d'une installation de production d'ammoniac existante dans un système selon l'une quelconque des revendications 1 à 6,
dans lequel l'installation de production d'ammoniac existante comprend :
∘ un électrolyseur d'eau (7) pour générer un gaz d'hydrogène et un gaz d'oxygène ;
∘ un premier système de compression pour comprimer un gaz de synthèse comprenant du gaz d'hydrogène et du gaz d'azote, ledit système de compression comprenant plusieurs unités de compression, pour générer un gaz de synthèse comprimé ; et
∘ une unité de synthèse d'ammoniac (16) pour la mise en réaction du gaz de synthèse comprimé, générant ainsi de l'ammoniac ;
dans lequel le procédé comprend les étapes de :
∘ introduction d'une seconde partie d'un gaz résiduaire généré dans une installation de production d'acide nitrique dans l'installation de production d'ammoniac ;
∘ introduction d'un moyen de mélange pour mélanger le gaz d'hydrogène et la seconde partie d'un gaz résiduaire, générant ainsi un gaz de synthèse,
∘ introduction d'une deuxième unité de traitement (14) en amont ou en aval du moyen de mélange et dans lequel au moins une unité de compression du premier système de compression est située en amont de la deuxième unité de traitement (14), dans lequel ladite deuxième unité de traitement (14) est configurée pour éliminer NO_{X}, CO, CO₂ et O₂ d'un flux de gaz et pour générer un flux de gaz comportant moins de 10 ppm d'oxygène atomique,
dans lequel le premier système de compression comprend en outre au moins une unité de compression en aval de la deuxième unité de traitement et comprend en outre :
• une première unité de refroidissement entre la deuxième unité de traitement (14) et l'au moins une unité de compression en aval de la deuxième unité de traitement (14), dans lequel la première unité de refroidissement est configurée pour échanger de la chaleur entre le gaz de synthèse et un réfrigérant ou entre la deuxième partie du gaz résiduaire et un réfrigérant, obtenant ainsi un premier réfrigérant chauffé, et dans lequel la première unité de refroidissement est en outre configurée pour fournir le premier réfrigérant chauffé à la deuxième unité de traitement (14) ; et/ou
• une deuxième unité de refroidissement en aval de l'au moins une unité de compression en aval de la deuxième unité de traitement (14), dans lequel la deuxième unité de refroidissement est configurée pour échanger de la chaleur entre le gaz de synthèse et un réfrigérant, obtenant ainsi un deuxième réfrigérant chauffé, et dans lequel la deuxième unité de refroidissement est en outre configurée pour fournir le deuxième réfrigérant chauffé à la deuxième unité de traitement (14).
